# EUROPEAN PATENT SPECIFICATION

(11) **EP 3 268 551 B1**
(45) Date of publication and mention of the grant of the patent: **09.09.2020**
(21) Application number: 16708398.9
(22) Date of filing: 04.03.2016
(51) Int. Cl.: E04B 2/86, A01G 9/02

(54) **PREFABRICATED PANEL FORMWORK, SUITABLE FOR BEING USED IN THE CONSTRUCTION OF BUILDINGS AND GARDENS**
VORGEFERTIGTE PANEELSCHALUNG ZUR VERWENDUNG IN DER KONSTRUKTION VON GEBÄUDEN UND GÄRTEN
COFFRAGE EN PANNEAUX PRÉFABRIQUÉS APPROPRIÉ POUR UNE UTILISATION DANS LA CONSTRUCTION DE BÂTIMENTS ET DE JARDINS

(30) Priority: 09.03.2015 IT AN20150040
(43) Date of publication of application: 17.01.2018
(73) Proprietor: Marinelli, Sergio, 60035 Jesi (AN) (IT)
(72) Inventor: Marinelli, Sergio, 60035 Jesi (AN) (IT)
(74) Representative: Baldi, Claudio
(86) International application number: PCT/EP2016/054634
(87) International publication number: WO 2016/142283

(56) References cited:
- FR-A5- 2 089 125
- JP-A- 2012 100 648
- US-A1- 2013 014 458
- "Heading NEPEAN (TM) Building & Infrastructure CONTENTS", , 1 March 2013 (2013-03-01), pages 1-12, XP055198868, Retrieved from the Internet: URL:http://www.nepean.com/files/mastermesh _-_expanded_metal_products.pdf [retrieved on 2015-06-29]

## Description

The present patent application for industrial invention relates to a panel formwork that is suitable for being used in the construction of buildings and gardens.

The peculiarities and advantages of the present invention will become more apparent following a short description of the prior art.

Following is a brief illustration of the traditional methods used to make concrete casting in order to obtain reinforced concrete structures, such as buildings, retaining walls, bridges and the like.

In such circumstances a formwork is prepared, which will receive a concrete casting and give the desired shape to concrete after setting; it being also provided that the space comprised in said formwork has been previously equipped with the irons intended to be drowned in the concrete casting to provide reinforcement.

In the majority of cases the formworks of this type are prepared by carpenters with wooden boards or steel panels that are intended to form the walls of the formwork. Document JP 2012 100648 A discloses the features of the preamble of claim 1.

Moreover, the boards or panels forming the two opposite vertical walls of a typical formwork are joined by means of horizontal plates, basically consisting in tie-rods, which are interposed between them and intended to be embedded in the concrete casting after the concrete has set and the vertical walls of the formwork have been removed.

In spite of its large diffusion, such a technology is impaired by some drawbacks.

The first drawback is represented by the complexity of the carpentry operations that are needed to place each formwork in position and to remove the walls of the formwork when the concrete has set.

It is worthless noting that these two activities are time-consuming and expensive in terms of labor costs.

An additional problem is represented by the fact the, after being completely removed from the formwork, the concrete casting shows its typical structure, which is not aesthetically pleasing and therefore requires to be finished or covered with a surface coating.

The new formwork of the invention has been devised starting from the observation of said drawbacks, its main peculiarity being that it has a prefabricated structure that is fully disposable and intended to remain joined to the concrete casting, without removing its parts as in the prior art.

The present invention defines a prefabricated formwork having the features of claim 1. In particular, it is composed of two vertical metal sections disposed at its ends, in correspondence of which the walls that cover the front and the back of the formwork are fixed; it being also provided that the space comprised between the two walls, i.e. the space intended to receive and contain the concrete casting, is suitably reinforced with the irons that are intended to be embedded in the concrete.

An additional peculiarity of the prefabricated formwork of the invention is that at least one of its vertical walls is directly obtained with a metal plate that is suitably finished on the front and is therefore intended to act as an aesthetically-pleasant finish for the concrete casting after setting.

Preferably, the coating sheet is obtained with an expanded metal plate, of the type provided with a regular set of horizontal slots that, when the metal plate is expanded, are practically shaped as pockets (substantially being protruding ashlars) that are open on top and protrude frontally from the metal plate.

In such a situation it can be well understood that the concrete casting made inside the latter version of the formwork according to the invention is intended to flow outside through said horizontal openings provided at the top of the pockets while the formwork is filled with concrete.

Such an effect can be used for ornamental purposes, especially when inert materials of any desired color are added to the concrete casting and the concrete flowing outside in fluid state through the slots of the metal plate is removed and cleaned before setting.

In other words, the concrete casting still in fluid state must be leveled in correspondence of each of said slots provided in said pockets of the metal plate.

In this way, after setting inside the formwork of the invention, the concrete casting remains visible through the slots of the metal plate, showing its color and chromatically decorating both the metal plate and the entire formwork of the invention.

Nevertheless, as anticipated in the title of this patent application, the prefabricated formwork of the invention can be also used for the construction of gardens, and more particular of the so-called "vertical" gardens.

This expression is used to identify vertical surfaces intended to be provided with flowers and plants until they are either completely or largely covered.

In such a context the formwork of the invention as described above is filled with soil until said front pockets are completely filled with it.

Also in this case, the soil "coming out" through the horizontal slots of said pockets must be suitably leveled and used as soil to grow climbing plants, small hedges, short-stemmed flowers and the like.

In fact, while growing, these vegetable varieties tend to take more and more space and become very visible on the front of the formwork according to the present invention, thus creating in the observer the impression of being in front of an entirely vegetable panel or barrier.

Moreover, it must be considered that, when it is filled with soil, the formwork of the invention acquires advantageously good sound-absorbing properties.

For purposes of clarity the description of the formwork according to the present invention continues with reference to the attached drawings, which are intended for purposes of illustration only, and not in a limiting sense, wherein:
- Fig. 1 is an axonometric view of the formwork according to the invention;
- Figs. 2 and 3 are partial enlarged views of the formwork of Fig. 1, diagrammatically showing two alternative uses of the formwork.

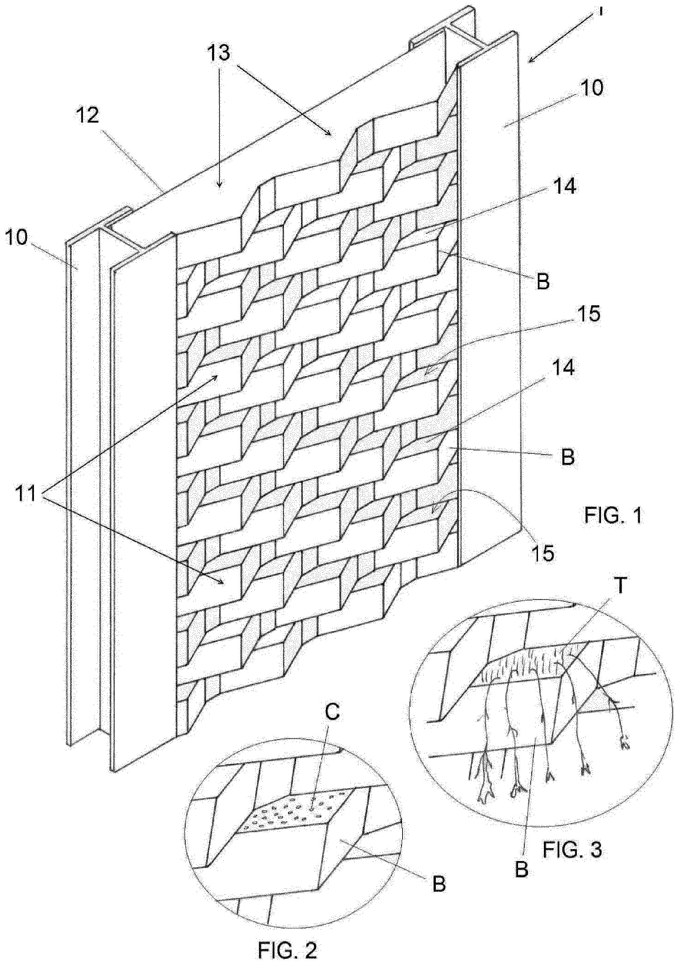

With reference to Fig. 1, the prefabricated formwork (1) has a panel-like structure. The formwork (1) comprises a pair of uprights (10), a front vertical wall (11) and a back vertical wall (12).

The uprights (10) are preferably metal sections, which can indifferently have a "C", "H", double-"T" or square section. The front and the back vertical walls (11, 12) have lateral borders fixed to the uprights (10) in such manner to define a cavity (13).

The front vertical wall (11) comprises a metal plate (steel or aluminum) comprising a plurality of projections (B) that protrude frontally from the metal plate in such manner to define pockets (15). Each projection (B) has a horizontal slot (14) disposed above the projection to access the pocket (15) defined by the projection. The pockets (15) are in communication with the cavity (13).

Preferably said front vertical wall (11) is obtained with a metal plate that undergoes an expansion process to obtain the projections (B) and the pockets (15).

Advantageously, each projection (B) is shaped as an outwards-protruding wedge, i.e. each projection (B) is shaped has an equilateral triangle or a trapezium in horizontal section.

Advantageously, the projections (B) are disposed along horizontal rows disposed in staggered position, in such manner that the horizontal slots (14) of all pockets (15) can be accessed by a user. Each row of projections (B) is shaped as a triangular or square wave in horizontal section and the adjacent rows are staggered by a half-cycle.

When the formwork (1) is used as a partition between two spaces that are accessible to people, both vertical walls (11, 12) of the formwork are intended to remain visible. In such a case, also the back vertical wall (12) advantageously comprises a metal plate provided with a plurality of projections (B) that protrude from the metal plate in such manner to define pockets (15) that are accessible from horizontal slots (14).

Alternatively, the back vertical wall (12) can comprise a flat metal plate, in case it is not intended to remain visible.

With reference to Fig. 2, the formwork (1) can be used as a container to contain a concrete casting in fluid state, in order to let the concrete set for the construction of masonry works. In this case, the cavity (13) of the formwork (1) is filled with concrete (C) in such manner that the concrete (C) also fills the pockets (15) in communication with the cavity (13). In this case, the concrete (C) contained in the pockets (15) can be seen from the horizontal slots (14) of the pockets (15). To avoid the unpleasant aesthetical impact of concrete, the upper portion of the pockets (15) can be filled with colored inert material that is poured in the pockets (15) through the horizontal slots (14) and is disposed on the concrete.

As shown in Fig. 3, the formwork (1) can be also used to contain soil (T) to make vertical gardens. In this case, the cavity (13) of the formwork (1) is filled with soil (T), in such manner that the soil (T) also fills the pockets (15) in communication with the cavity (13). In this way, the pockets (15) acts as pots used to grow plants that are intended to flourish out of the pockets (15) until the external surface of the vertical wall (11, 12) of the formwork (1) is either completely or partially covered.

It must be considered that the formwork (1) is of disposable type. In fact, in both uses of the formwork (1), all parts (uprights (10) and vertical walls (11, 12)) are intended to be permanently embedded in the structure formed by the formwork without the possibility of separating or removing said parts, as in the case of traditional modular (reusable) formworks after the filling and setting of the concrete.

The formworks (1) of the invention can be disposed in vertical rows, stacked one on top of the other, or in horizontal rows, positioned one next to the other. In order to keep together the formworks (1) disposed in horizontal or vertical rows, plate-shaped tie-rods such as the ones used to assemble the modular formworks of the prior art.

Preferably, each plate tie-rod is interposed between the adjacent edges of two formworks (1), in such manner to be embedded in the concrete casting or in the soil.

Advantageously, in the case of horizontal or vertical rows of formworks, reinforcing irons are disposed in the cavities (13) of the formworks (1). In this way the reinforcing irons are embedded in the concrete cast or in the soil disposed in the cavity of the formwork in such manner to improve the connection between adjacent formworks.

## Claims

1. Prefabricated formwork comprising:
- a pair of uprights (10),
- a front vertical wall (11) and a back vertical wall (12) with lateral edges fixed to the uprights (10) in such manner to define a single cavity (13) that is open on top and on the bottom;
wherein
said front vertical wall (11) comprises a metal plate comprising a plurality of projections (B) that protrude frontally from the metal plate in such manner to define pockets (15),
said pockets (15) formed by the projections (B) are in communication with said cavity (13) formed between the two vertical walls (11, 12) of the formwork (1); said cavity (13) of the formwork being suitable for being filled with concrete (C) or soil (T) so that to fill said pockets (15);
said front vertical wall (11) comprises a plurality of horizontal rows of projections (B) ; **characterized in that**
each projection (B) has a single horizontal slot (14) disposed above the projection to access the pocket (15) defined by the projection; said plurality of horizontal rows of projections (B) being
disposed in staggered position so that said horizontal slots (14) of the pockets (15) can be accessed by a user;
each row of projections (B) is shaped as a triangular or square wave in horizontal section and the adjacent rows are staggered by a half-cycle.

2. The formwork of claim 1, wherein said back vertical wall (12) comprises a metal plate comprising a plurality of projections (B) that protrude on the back from the metal plate in such manner to define pockets (15), wherein each projection (B) has a horizontal slot (14) disposed above the projection in order to access the pocket (15) defined by the projection.

3. The formwork of claim 1 or 2, wherein said front vertical wall (11) is made of expanded metal plate and said uprights (10) are metal sections.

4. The formwork of claim 2, wherein said back vertical wall (12) is made of expanded metal plate and said uprights (10) are metal sections.

5. The formwork of any one of the preceding claims, wherein said cavity (13) of the formwork contains concrete (C).

6. The formwork of any one of claims 1 to 4, wherein said cavity (13) contains soil (T) so that said pockets (15) can act as pots for growing plants.

7. The formwork of any one of the preceding claims, wherein each projection (B) is shaped as an outward-protruding wedge.

8. The formwork of claim 2, wherein said back vertical wall (12) comprises a plurality of horizontal rows of projections (B) disposed in staggered position so that said horizontal slots (14) of the pockets (15) can be accessed by the user.

## Patentansprüche

1. Vorgefertigte Verschalung, umfassend:
- ein Paar von Pfosten (10),
- eine vertikale Vorderwand (11) und eine vertikale Hinterwand (12) mit an den Pfosten (10) befestigten seitlichen Kanten, derart, dass ein Hohlraum (13) definiert wird, der oberseitig und unterseitig offen ist;
wobei
die vertikale Vorderwand (11) ein Blech umfasst, umfassend eine Mehrzahl von Vorsprüngen (B), die vorn aus dem Blech vorstehen, derart, dass jeweilige Taschen (15) gebildet werden,
wobei die aus den Vorsprüngen (B) gebildeten Taschen (15) mit den zwischen den vertikalen Wänden (11, 12) der Verschalung (1) gebildeten Hohlräumen (13) in Verbindung stehen; wobei die Hohlräume (13) der Verschalung dazu geeignet sind, mit Beton (C) oder Erde (T) gefüllt zu werden, derart, dass die Taschen (15) gefüllt sind;
die vertikale Vorderwand (11) eine Mehrzahl von horizontalen Reihen von Vorsprüngen umfasst,
**dadurch gekennzeichnet, dass**
jeder Vorsprung (B) einen einzelnen horizontalen Schlitz (14) aufweist, der oberhalb des Vorsprungs angeordnet ist, um Zugang zu der durch den Vorsprung definierten Tasche (15) zu gewähren; wobei die Mehrzahl von horizontalen Reihen von Vorsprüngen (B) verschoben angeordnet ist, derart, dass die horizontalen Schlitze (14) der Taschen einem Benutzer zugänglich sind;
jede Reihe von Vorsprüngen (B) wie eine im horizontalen Querschnitt dreieckige oder viereckige Welle gebildet ist und die benachbarten Reihen um eine halbe Periode verschoben sind.

2. Verschalung nach Anspruch 1, wobei die vertikale Hinterwand (12) ein Blech umfasst, umfassend eine Mehrzahl von Vorsprüngen (B), die rückwärtig aus dem Blech vorstehen, derart, dass jeweilige Taschen (15) definiert werden, wobei jeder Vorsprung (B) einen horizontalen Schlitz (14) aufweist, der oberhalb des Vorsprungs angeordnet ist, um Zugang zu der von dem Vorsprung definierten Tasche (15) zu gewähren.

3. Verschalung nach Anspruch 1 oder 2, wobei die vertikale Vorderwand (11) aus Streckblech hergestellt ist und die Pfosten (10) Metallprofile sind.

4. Verschalung nach Anspruch 2, wobei die vertikale Hinterwand (12) aus Streckblech hergestellt ist und die Pfosten (10) Metallprofile sind.

5. Verschalung nach einem der vorstehenden Ansprüche, wobei der Hohlraum (13) der Verschalung Beton (C) enthält.

6. Verschalung nach einem der Ansprüche von 1 bis 4, wobei der Hohlraum (13) Erde (T) enthält, derart, dass die Taschen (15) als Gefäße für den Anbau von Pflanzen fungieren können.

7. Verschalung nach einem der vorstehenden Ansprüche, wobei jeder Vorsprung (B) die Form eines nach außen vorstehenden Keils aufweist.

8. Verschalung nach Anspruch 2, wobei die vertikale Hinterwand (12) eine Mehrzahl von horizontalen Reihen von zueinander verschobenen Vorsprüngen (B) umfasst, derart, dass die horizontalen Schlitze (14) der Taschen (15) einem Benutzer zugänglich sind.

## Revendications

1. Coffrage préfabriqué comprenant :
- une paire de montants (10),
- une paroi verticale antérieure (11) et une paroi verticale postérieure (12) ayant des bords latéraux fixés aux montants (10), de manière à définir une cavité (13), ouverte supérieurement et inférieurement ;
où
ladite paroi verticale antérieure (11) comprend une feuille de tôle comprenant une pluralité de saillies (B) qui débordent antérieurement de la feuille de tôle de façon à définir des respectives poches (15),
lesdites poches (15) formées par les saillies (B) sont en communication avec lesdites cavités (13) formées entre les deux parois verticales (11, 12) du coffrage (1) ; ladite cavité (13) du coffrage étant apte à être remplie avec du béton (C) ou de la terre (T) de façon à remplir lesdites poches (15);
ladite paroi verticale antérieure (11) comprend une pluralité de rangées horizontales de saillies
**caractérisé en ce que**
chaque saillie (B) présente une seule fente horizontale (14) disposée au-dessus de la saillie pour accéder à la poche (15) définie par la saillie ; ladite pluralité de rangées horizontales de saillies (B) étant disposées sur des positions décalées de façon à ce que les fentes horizontales (14) des poches puissent être accessibles par un utilisateur ;
chaque rangée de saillies (B) est formée comme une vague triangulaire ou carrée en section horizontale et les rangées adjacentes sont décalées d'une demi-période.

2. Coffrage selon la revendication 1, où ladite paroi verticale postérieure (12) comprend une feuille de tôle comprenant une pluralité de saillies (B) qui débordent postérieurement de la feuille de tôle, de façon à définir des respectives poches (15), où chaque saillie (B) a une fente horizontale (14) disposée au-dessus de la saillie, pour l'accès à la poche (15) définie par la saillie.

3. Coffrage selon la revendication 1 ou 2, où ladite paroi verticale antérieure (11) est une tôle aplatie et lesdits montants (10) sont des profils métalliques.

4. Coffrage selon la revendication 1 ou 2, où ladite paroi verticale postérieure (12) est une tôle aplatie et lesdits montants (10) sont des profils métalliques.

5. Coffrage selon l'une quelconque des revendications précédentes, où ladite cavité (13) du coffrage contient du béton (C).

6. Coffrage selon l'une quelconque des revendications de 1 à 4, où ladite cavité (13) contient de la terre (T), de façon à ce que lesdites poches (15) puissent être utilisées comme vases pour cultiver des plantes.

7. Coffrage selon l'une quelconque des revendications précédentes, où chaque saillie (B) a la forme d'un cône qui déborde vers l'extérieur.

8. Coffrage selon la revendication 2, où ladite paroi verticale postérieure (12) comprend une pluralité de rangées horizontales de saillies (B) décalées entre elles, de façon à ce que lesdites fentes horizontales (14) des poches (15) soient accessibles de la part d'un utilisateur.
